# EUROPEAN PATENT SPECIFICATION

(11) **EP 3 432 409 B1**
(45) Date of publication and mention of the grant of the patent: **20.11.2019**
(21) Application number: 17182043.4
(22) Date of filing: 19.07.2017
(51) Int. Cl.: H01M 10/42, H01M 10/48, H02J 7/00

(54) **CELL SUPERVISION CIRCUIT CARRIER, BATTERY SYSTEM AND ELECTRIC VEHICLE**
ZELLENÜBERWACHUNGSSCHALTUNGSTRÄGER, BATTERIESYSTEM UND ELEKTROFAHRZEUG
SUPPORT DE CIRCUIT DE SUPERVISION CELLULAIRE, SYSTÈME DE BATTERIE ET VÉHICULE ÉLECTRIQUE

(43) Date of publication of application: 23.01.2019
(73) Proprietor: Samsung SDI Co., Ltd., Yongin-si, Gyeonggi-do 17084 (KR)
(72) Inventor: PRETSCHUH, Markus, 8020 Graz (AT); KLOBASA, Roland, 8051 Graz (AT)
(74) Representative: Gulde & Partner

(56) References cited:
- EP-A2- 2 546 919
- WO-A1-2010/003375
- WO-A1-2015/179629
- US-A- 5 821 734

## Description

### Field of the Invention

The present invention relates to a cell supervision circuit carrier, to a battery system comprising a plurality of such cell supervision circuit carriers and to a vehicle with such a battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs, each battery cell is coupled to a common current collector structure and a common battery management system. In modular designs, pluralities of battery cells are connected to form submodules and several submodules are connected to form the battery module. Battery management functions may be realized either on module or submodule level and thus interchangeability of the components is improved. One or more battery modules are mechanically and electrically integrated, equipped with a thermal management system and set up for communication with one or more electrical consumers in order to form a battery system.

To provide thermal control of a battery system a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cooling devices for effectively emitting/discharging/dissipating heat from the cells is required.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers. Battery systems usually comprise a battery management system (BMS) for processing this information.

The BMS is usually coupled to the controller of one or more electrical consumers as well as to each of the battery modules of the battery system. For controlling a plurality of battery modules by a single BMS a daisy chain setup may be used. In such setup, the BMS, as master, is connected for communication in series to a plurality of battery modules, particularly to a plurality of cell supervision circuits, CSC, of the respective battery modules. Daisy chain setups as well as corresponding protocols are commonly used in the art.

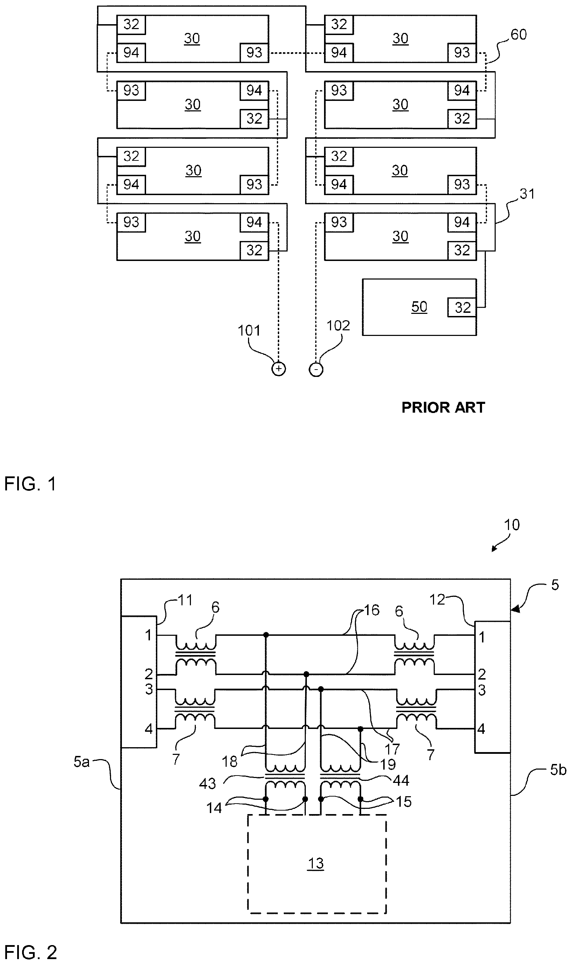

An exemplary battery system with a daisy chain setup according to the prior art is illustrated in Figure 1. Therein, a BMS 50 is setup for communication with a plurality of battery modules, each comprising a cell supervision circuit carrier 30 according to the prior art. Such cell supervision circuit carrier 30 comprises a negative module terminal 93 and a positive module terminal 94. A negative module terminal 93 of a first battery module is electrically connected to a negative system terminal 102 via a busbar 60. The positive system terminal 94 of that first battery module is connected to the negative module terminal 93 of a subsequent battery module via a busbar 60 as well. The positive module terminal 94 of a last battery module is connected to a positive system terminal 101 for setting up the power connection.

For setting up a communication connection between the battery modules and a BMS 50, each cell supervision circuit carrier 30 further comprises a connector 32 for setting up a daisy chain. The connector 32 serves as input/output for communication between the BMS 50 and the CSCs of the modules. One wiring harness 31 connects a connector 32 of the BMS 50 with the connectors 32 of all cell supervision circuit carriers 30. Hence, the wiring harness 30 disadvantageously comprises long wires that are prone for EMC issues and usually have to be tailor-made for each battery system.

Alternatively to the prior art battery system shown in Figure 1, a daisy chain optimized layout could be used. However, this usually results in a worse busbar configuration. Also, a different PCB designs for each cell supervision circuit carriers 30 could be used for reducing wiring. However, this would result in higher development and production costs. EP 2 546 919 A2 discloses a battery management system with multiple battery modules coupled in series, battery management chips coupled to the battery modules and a host processor coupled to the battery management chip. WO 2015/179629 A1 discloses a battery pack of battery modules coupled in series, wherein each battery module comprises battery cells that are connected in parallel and that each comprises a single cell sensing module, SCSM. However, none of the prior art documents provide an optimal layout for a battery system.

It is thus an object of the present invention to overcome or reduce at least some of the drawbacks of the prior art and to provide a cell supervision circuit carrier that allows for a battery system with a low complexity communication network between individual battery modules and that has low development and manufacturing costs.

### Summary of Invention

One or more of the drawbacks of the prior art could be avoided or at least reduced by means of the present invention. In particular, a cell supervision circuit carrier (CSCC) for a battery module is provided that comprises a first connector with a plurality of first contact pins, preferably at least four first contact pins, and a second connector with a plurality of second contact pins, preferably at least four second contact pins. The cell supervision circuit carrier of the invention further comprises a circuit carrier board that is configured for being mounted to the battery module and plurality of conductive pads disposed on the circuit carrier board. The plurality of conductive pads comprises a first pair of conductive pads that are configured for being connected to a differential input of the CSC and a second pair of conductive pads that are configured for being connected to a differential output of the CSC. Any CSC chip comprising such differential input and differential output and being configured for the cell supervision functions desired in the battery system might be used with the claimed CSCC.

The cell supervision circuit carrier further comprises a first pair of conducting lines that are electrically connecting a first pair of the first contact pins with a first pair of the second contact pins and a second pair of conducting lines that are electrically connecting a second pair of the first contact pins with a second pair of the second contact pins. Therein, the first pairs of contact pins differ from the second pairs of contact pins, i.e. no pin of a first pair of contact pins also belongs to a second pair of contact pins. The cell supervision circuit carrier also comprises a third pair of conducting lines electrically connecting the first pair of conductive pads with the first pair of conducting lines and a fourth pair of conducting lines electrically connecting the second pair of conductive pads with the second pair of conducting lines.

The layout as described above provides a cell supervision circuit carrier with two connectors, each of which can be used either as an input or as an output for any CSC chip with a differential input and a differential output that is plugged into the chip socket. In other words, each of the first connector and the second connector is configured for receiving input signals for the CSC from the BMS or another battery module and is also configured for transmitting output signals of the CSC to the BMS or another battery module. Further preferred, the first and the second connector are each configured for interconnecting two cell supervision circuit carriers according to the invention using additional connection cables between the cell supervision circuit carriers. Further preferred, each of the first and second connector is configured to be connected to a BMS using an additional connection cable.

Advantageously, a battery system with a plurality of battery modules, each comprising an identical cell supervision circuit carrier according to the present invention, can be set up for a daisy chain communication with the shortest possible wiring length of connection cables between the cell supervision circuit carriers. Further, identical connection cables can be used for each interconnection between the battery modules and/or the BMS. As only the one cell supervision circuit carrier design according to the invention is required for the whole battery system production and development costs for the CSCCs are minimized. Preferable, the cell supervision circuits are configured to transmit and receive analogous signals, e.g. differential signals, via the first and second connectors. Therein the signals are preferably modulated on alternating currents. Advantageously, this kind of communication is highly independent of the voltage levels of the individual battery modules. Thus, less error-prone and secure communication can be provided even between unbalanced battery modules.

The circuit carrier board preferably is a flexible printed circuit film, a tape carrier package (TCP), a printed circuit board (PCB), or any other suitable substrate. Further preferred, the first and second connector, the first and second pair of conductive pads, and the first, second, third and fourth pair of conducting lines are each disposed on the circuit carrier board. Therein, the electrical connections or interconnections described herein may be realized by wires or conducting elements, e.g. on a PCB or another kind of circuit carrier. The conducting elements may comprise metallization, e.g. surface metallization, and/or pins, and/or may comprise conductive polymers or ceramics. Further electrical energy might be transmitted via wireless connections, e.g. using electromagnetic radiation and/or light. The circuit carrier board may have an essentially plane shape or might be segmented with recesses or openings between the components, e.g. conducting lines, as described above. According to a preferred embodiment, the cell supervision circuit carrier further comprises a chip socket that is configured for receiving a cell supervision circuit (CSC). Therein, the chip socket is mounted to the plurality of conductive pads and comprises a first pair of socket pins that are configured for being connected to a differential input of the CSC and that are connected to the first pair of conductive pads and further comprises a second pair of socket pins that are configured for being connected to a differential output of the CSC and that are connected to the second pair of conductive pads. In other words, depending on whether or not the chip socket is used, the input and output pins or contacts of the CSC are either connected to the socket pins of the chip socket or directly to the conductive pads of the circuit carrier board.

Preferably, the cell supervision circuit carrier further comprises a plurality of cell pins that are configured for being electrically connected to the plurality of battery cells of the battery module to which the circuit carrier board is mounted to. The cell supervision circuit carrier preferably further comprises electrically conducting cell data lines that are configured for electrically connecting the plurality of cell pins with at least one data input pin of the CSC. The CSC used with the cell supervision circuit carrier of the invention is preferably configured to monitor the cell voltages of some or each of a battery module's battery cells via the at least one data input pin and may further be configured to actively or passively balance the voltages of the individual battery cells of the module via control signals output via output pins.

Further preferred, the cell supervision circuit carrier further comprises busbar elements for electrically interconnecting the battery cells of the battery module in series and/or in parallel. In other words, busbar elements of the battery system for interconnecting the battery cells within the battery modules might constitute a part of the cell supervision circuit carrier. Particularly preferred, the busbar elements are configured as metallization that is disposed on the circuit carrier board of the cell supervision circuit carrier. A battery system additionally comprises busbars that provide a power connection between different battery modules as illustrated in Figure 1. According to such embodiment, the cell supervision circuit carrier is part of the communication wiring harness for setting up a daisy chain communication between battery modules as well as a part of the power connection wiring between modules of the battery system. According to this embodiment, the busbar elements may comprise any kind of wire, cable, metallization or an electrically conducting polymer.

In an alternate embodiment, the battery system comprises a plurality of busbars for electrically interconnecting the battery modules and a plurality of busbar elements for electrically interconnecting the battery cells of the respective modules, wherein the busbars and the busbar elements are both separated from the cell supervision circuit carrier. According to this embodiment, the CSCC is electrically isolated from the busbars elements. The busbars are preferably made of an electrically conductive material, e.g. aluminum, and have a strip-like shape with a uniform busbar width and a uniform busbar height. However, the shape of the busbars may be freely adapted to meet individual requirements of a specific battery design, e.g. in view of a limited installation space. In particular, the busbar can be in the form of straight, bend or arbitrary curved belts, bands, ribbons, ribs or rails. According to this embodiment, the busbar elements may be configured similarly to the busbars.

According to a particularly preferred embodiment, the first pair of conductive pads is capacitively or inductively coupled to the third pair of conducting lines and the second pair of conductive pads is capacitively or inductively coupled to the fourth pair of conducting lines. Particularly preferred, for capacitively coupling the first pair of conductive pads and the third pair of conducting lines, the cell supervision circuit carrier further comprises a first set of capacitors and for capacitively coupling the second pair of conductive pads and the fourth pair of conducting lines the cell supervision circuit carrier further comprises a second set of capacitors. Further preferred, for inductively coupling the first pair of conductive pads and the third pair of conducting lines the cell supervision circuit carrier further comprises a first transformer and for inductively coupling the second pair of conductive pads and the fourth pair of conducting lines the cell supervision circuit carrier further comprises a second transformer.

According to another embodiment of the cell supervision circuit carrier, first common mode chokes, preferably first high frequency, HF, common mode chokes are interconnected between the first pairs of contact pins and connection nodes between (i.e. connecting) the first and third pair of conducting lines. Further preferred, second common mode chokes, preferably second HF common mode chokes, are interconnected between the second pairs of contact pins and connection nodes between (i.e. connecting) the second and fourth pair of conducting lines.

The capacitive and or inductive coupling preferably decouples the CSC from the voltage potentials of the battery modules and the voltage drop between the modules. This helps to protect the CSC from disturbances related to power generation. Analogous signals modulated on AC carrier currents with sufficient high frequency can pass the capacitive coupling. That is, by utilizing the first and second set of capacitors, the first and second transformer and/or the first and second common mode chokes as described herein, the CSC is protected from harmful high frequencies and hence EMC issues are effectively prevented.

In a particularly preferred embodiment of the cell supervision circuit carrier comprising a circuit carrier board as described above, the circuit carrier board comprises a first lateral edge and a second lateral edge that is opposite to the first lateral edge. In other words, the circuit carrier board has an essential rectangular shape that is preferably adapted to the dimensions of an essential rectangular battery module to which the circuit carrier board is mounted. Therein, the first connector is arranged at the first lateral edge and the second connector is arranged at the second lateral edge. Further preferred, the first connector and the second connector are equivalent (i.e. identical) to each other. In other words, the cell supervision circuit carrier of this embodiment is completely symmetrical, particularly mirror symmetrical, e.g. at a center axis that is perpendicular to a stacking direction of the respective battery module. Hence, the cell supervision circuit carrier may be mounted in any direction within the battery module. Further, identical cell supervision circuit carriers are usable for all battery modules of a system and flexibility in setting up the system is increased.

Another aspect of the present invention relates to a battery system comprising a first system terminal and a second system terminal, and a plurality of battery modules connected in series between the first system terminal and the second system terminal. Therein, each battery module comprises a plurality of battery cells that are electrically interconnected in series and/or in parallel between a negative module terminal and a positive module terminal of the battery module. Further, each of the plurality of battery modules comprises a cell supervision circuit carrier according to the invention as described above as well as a cell supervision circuit, CSC, connected to respective cell supervision circuit carriers. According to the present invention, the cell supervision carriers of the plurality of battery modules are connected to each other via their first and second connectors in a daisy chain configuration.

Preferably, each of the cell supervision circuit chips connected to the cell supervision circuit carriers of the battery system comprise a differential input and a differential output. Therein, the differential input of a CSC comprises a pair of input pins and the differential output of a CSC comprises a pair of output pins. In this embodiment, the pair of input pins is electrically connected with the first pair of conductive pads or socket pins and the pair of output pins is electrically connected with the second pair of conductive pads or socket pins. Preferably, the input pins and output pins of the CSC as well as the socket pins of the chip socket of the cell supervision circuit carrier are configured in through-hole technology. Therein, the input/output pins may be configured for being plugged in the socket pins configured as through holes. Alternatively, the cell supervision circuit is configured in SMD technology and its input pins and output pins might be configured for being directly connected to the conductive pads, e.g. via wire bonding.

Further preferred, the battery system further comprises a plurality of busbars, wherein each busbar interconnects a positive module terminal of a first battery module and a negative module terminal of a second battery module. The busbars are preferably made of an electrically conductive material, e.g. aluminum, and have a strip-like shape with a uniform busbar width and a uniform busbar height. However, the shape of the busbars may be freely adapted to meet individual requirements of a specific battery design, e.g. in view of a limited installation space. In particular, the busbar can be in the form of straight, bend or arbitrary curved belts, bands, ribbons, ribs or rails.

Further preferred, the plurality of battery cells of each of the battery modules is electrically interconnected in series and/or in parallel between the negative module terminal and the positive module terminal of the battery module via busbar elements. According to an embodiment, the busbar elements constitute a part of the cell supervision circuit carrier. Particularly preferred, the busbar elements are configured as metallization that is disposed on the circuit carrier board of the cell supervision circuit carrier. In this embodiment, the busbar elements may comprise any kind of wire, cable, metallization or an electrically conducting polymer. Alternatively, the busbar elements are separated from the cell supervision circuit carrier and, preferably, the CSCC is electrically isolated from the busbars elements. Therein, the busbar elements may be configured similarly to the busbars.

For interconnecting the cell supervision circuit carriers of the battery modules of the battery system, the latter further comprises a plurality of connection cables, each comprising a first connection plug comprising a plurality of contact pins, preferably at least four contact pins, a second connection plug comprising a plurality of contact pins, preferably at least four contact pins, and a pair of conducting lines that are electrically connecting a first pair of contact pins of the first connection plug and a second pair of contact pins of the second connection plug. Therein, each connection cable interconnects a second connector of a first battery module and a first connector of a second battery module by connecting one of the first and second connection plugs to the first connector and by connecting the other one of the first and second connection plugs to the second connector.

Preferably, each of the connection cables of the battery system further comprises another pair of conducting lines that are electrically connecting a second pair of contact pins of the first connection plug and a first pair of contact pins of the second connection plug. By utilizing a total of four conducting lines connecting each pin of the first connection plug with one pin of the second connection plug such that each pin of the second connection plug is connected with one pin of the first connection plug a two-directional communication across the daisy chain formed by the cell supervision circuit carriers is ensured.

Preferably, the connection plugs of the connection cables are either color coded or mechanically coded for allowing a connection to the connectors only in one relative orientation. It thus ensured that no wrong connection might occur during the assembly of a battery system. However, in this case up to three different cable versions may be required for interconnecting all cell supervision circuit carriers that might be orientated differently toward each other. In a further preferred embodiment, the connection plugs are not mechanically coded such that a connection between connection plug and connectors is possible in every relative orientation. This allows using only one kind of cable for all relative orientations of adjacent cell supervision circuit carrier, particularly rotational orientations. In the latter embodiment, a color coding is preferably utilized for ensuring a system's correct assembly.

Further preferred, the battery system also comprises a battery management system that is coupled to the first connector of a first battery module via a further connection cable. Depending on the connector type of the BMS a connection cable as described above can be used. Hence, only one type of connection cables is required for the whole battery system.

Further preferred, the battery system comprises a plurality of identical battery modules, each comprising the same amount of battery cells that are stacked in the same way. Further preferred, the battery system comprises a plurality of identical cell supervision circuit carriers, each being adapted to the size and the shape of the battery modules. Particularly preferred, each of the cell supervision circuit carriers comprises a circuit carrier board with an essential rectangular shape and a first lateral edge and a second lateral edge that is opposite to the first lateral edge. Further, each circuit carrier board comprises a first connector that is arranged at the first lateral edge and a second connector that is arranged at the second lateral edge, wherein the first connector and the second connector are preferably equivalent or even identical to each other. Hence, interchangeability of the system's components is increased while the amount of required spare parts is decreased.

Another aspect of the present invention relates to an electric vehicle that comprises a plurality of cell supervision circuit carriers as described above and/or a battery system as described above. Further aspects of the present invention are disclosed in the dependent claims and in the following description.

### Brief Description of the Drawings

Features will become apparent to those of ordinary skill in the art by describing in detail exemplary embodiments with reference to the attached drawings in which:
- Fig. 1: illustrates a schematic top view of a battery system according to the prior art;
- Fig. 2: illustrates a schematic top view of a cell supervision circuit carrier according to a first embodiment;
- Fig. 3: illustrates a schematic top view of a cell supervision circuit carrier according to a second embodiment with a cell supervision circuit chip mounted thereon;
- Fig. 4: illustrates a schematic top view of a battery system according to an embodiment;
- Fig. 5: illustrates a schematic top view of a battery system according to another embodiment;
- Fig. 6: illustrates a sectional top view of a battery system according to an embodiment, emphasizing the connection cables between adjacent cell supervision circuit carriers; and
- Fig. 7: illustrates a sectional top view of a battery system according to another embodiment, emphasizing the connection cables between adjacent cell supervision circuit carriers.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

The battery system according to the prior art as illustrated in Figure 1 has already been described in the introductory part of the present application. As already mentioned there, the cell supervision circuit carriers 30 of the prior art commonly comprise only a single connector 32 as a combined in- and output and hence have to be connected via a complicated and large prior art wiring harness 31. Such wiring harness 31 has to be expensively tailor-made for a certain battery system and requires a lot of the generally sparse installation space.

Figure 2 illustrates a cell supervision circuit carrier 10 according to a first embodiment. The cell supervision circuit carrier 10 comprises a circuit carrier board 5. The circuit carrier board 5 may be a printed circuit board or a flexible circuit board and has a rectangular shape with a first lateral edge 5a and a second lateral edge 5b opposite the first lateral edge 5a.

A first connector 11 with four first contact pins 1, 2, 3, 4 is arranged at the first lateral edge 5a on the top surface of the circuit carrier board 5 and a second connector 12 with four second contact pins 1, 2, 3, 4 is arranged at the second lateral edge 5b on the top surface of the circuit carrier board 5. A first pair of first contact pins 1, 2 is electrically connected to a first pair of second contact pins 1, 2 via a first pair of conducting lines 16. Two first common mode chokes 6 are integrated in the first pair of conducting lines 16 as high frequency barriers. A second pair of first contact pins 3, 4 is electrically connected to a second pair of second contact pins 3, 4 via a second pair of conducting lines 17. Two second common mode chokes 7 are integrated in the second pair of conducting lines 17 as high frequency barriers.

Further, a chip socket 13 configured for receiving a certain CSC is arranged on the top surface of the circuit carrier board 5. The chip socket 13 is mounted on a plurality of conductive pads on the surface of the circuit carrier board 5. The chip socket 13 comprises a first pair of socket pins 14 and a second pair of socket pins 15 that are configured for being connected to input and output pins of the certain CSC, respectively. The first pair of socket pins 14 and the second pair of socket pins 15 are electrically connected to a third pair of conducting lines 18 and a fourth pair of conducting lines 19, respectively. The first pair of socket pins 14 is electrically connected to the first pair of conducting lines 16 via the third pair of conducting lines 18. Connection nodes of the first and third pair of conducting lines are located between the first common mode chokes 6. A first transformer 43 is arranged in the third pair of conducting lines 18 and interconnected between the first pair of socket pins 14 and the first pair of conducting lines 16. The second pair of socket pins 15 is electrically connected to the second pair of conducting lines 17 via the fourth pair of conducting lines 19. Connection nodes of the second and fourth pair of conducting lines are located between the first common mode chokes 7. A second transformer 44 is arranged in the fourth pair of conducting lines 19 and interconnected between the second pair of socket pins 15 and the second pair of conducting lines 17.

On the other hand, the CSC may be mounted directly on the plurality of conductive pads on the surface of the circuit carrier board 5 without the chip socket. In this case, the plurality of conductive pads comprises a first pair of conductive pads and a second pair of conductive pads that are configured for being connected to input and output pins of the certain CSC, respectively, and that are connected to the first pair of conducting lines 16 via the third pair of conducting lines 18 and to the second pair of conducting lines 17 via the fourth pair of conducting lines 19, respectively.

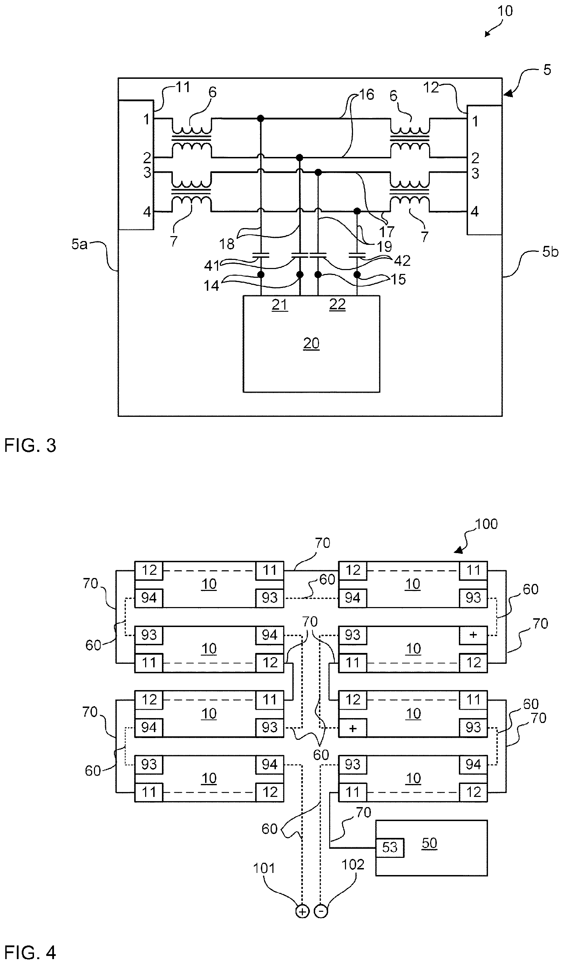

Figure 3 illustrates a cell supervision circuit carrier 10 according to a second embodiment. The description of features which are similar to that of the cell supervision circuit carrier 10 illustrated in Figure 1 and have already been described with respect thereto is omitted.

A CSC 20 is disposed in the chip socket arranged on the top surface of the circuit carrier board 5. A differential input 21 of the CSC 20, comprising a pair of input pins, is electrically connected with the first pair of socket pins 14. A differential output 22 of the CSC 20, comprising a pair of output pins, is electrically connected with the second pair of socket pins 15.

The first pair of socket pins 14 is electrically connected to the first pair of conducting lines 16 via a third pair of conducting lines 18. A first set of capacitors 41 is arranged in the third pair of conducting lines 18 and interconnected between the first pair of socket pins 14 and the first pair of conducting lines 16. The second pair of socket pins 15 is electrically connected to the second pair of conducting lines 17 via a fourth pair of conducting lines 19. A second set of capacitors 42 is arranged in the fourth pair of conducting lines 19 and interconnected between the second pair of socket pins 15 and the second pair of conducting lines 17.

The cell supervision circuit carriers 10 of Figures 2 and 3 advantageously comprise a symmetric layout with a first connector 11 and a second connector 12 that each can be used either for receiving a signal to be inputted in a CSC 20 or for transmitting a signal outputted of a CSC 20 disposed in chip socket 13. Hence, the cell supervision circuit carriers 10 of Figures 2, 3 can be arranged in any orientation and at any position in a battery system.

Figure 4 illustrates a schematic top view of a battery system 100 according to an embodiment. Therein, a plurality of battery modules (not shown), each comprising a cell supervision circuit carrier 10, are electrically connected in series between a positive system terminal 101 and a negative system terminal 102. The battery modules are connected to each other by busbars 60, shown as dotted lines, and the cell supervision circuit carriers 10 are connected to each other via connection cables 70, shown as solid lines.

Each battery module comprises a negative module terminal 93 and a positive module terminal 94. The negative module terminal 93 of a first battery module is electrically connected to the negative system terminal 102. The positive module terminal 94 of the first battery module is electrically connected to the negative module terminal 93 of the subsequent battery module via a busbar 60 and in the same manner the further module terminals 93, 94 are connected to each other via busbars 60 until the positive module terminal 94 of a last battery module is connected to the positive system terminal 101.

Each cell supervision circuit carrier 10 comprises a first 11 and a second connector 12 that are connected to each other as well as to a CSC (not shown) disposed on the cell supervision circuit carrier 10 as illustrated in Figures 2 and 3 and as indicated by dashed lines. The second connector 12 of a first cell supervision circuit carrier 10 is connected via a connection cable 70 with the first connector 11 of a next cell supervision circuit carrier 10.

The battery system 100 further comprises a battery management system, BMS, 50. The BMS 50 comprises a BMS connector 53 that is connected to a first connector 11 of the first battery module via a connection cable 70 for data transmission. The plurality of connection cables 70 and the cell supervision circuit carriers 10 together form a daisy chain connecting the BMS 50 to each of the cell supervision circuit carriers 10 of the battery system 100. As can be seen, the total length of the connection cables 70 is much less than the length of the prior art wiring harness 31 as illustrated in Figure 1 and thus wiring complexity is reduced.

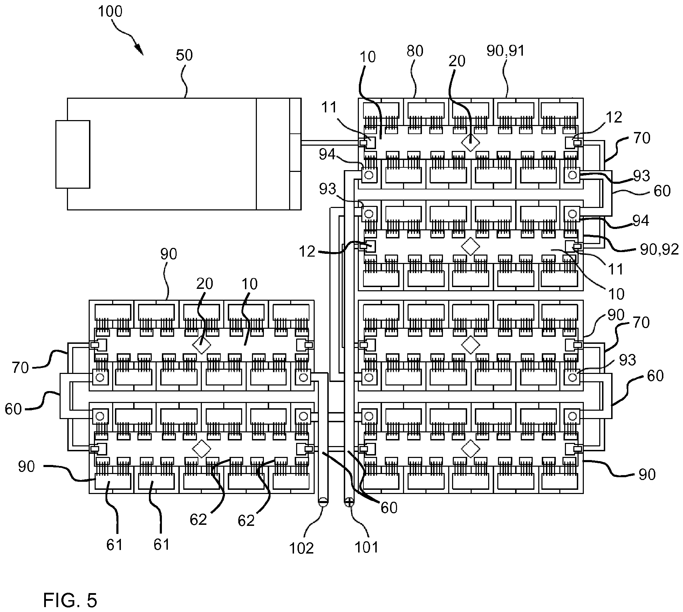

Figure 5 illustrates a schematic top view of a battery system 100 according to another embodiment. Therein, a plurality of battery modules 90 are electrically connected in series between a positive system terminal 101 and a negative system terminal 102. Each battery module 90 comprises ten stacked prismatic battery cells 80, with five parallel connected pairs of battery cells 80 connected in series between a first module terminal 93 with positive polarity and a second module terminal 94 with negative polarity.

Each battery module 90 further comprises a cell supervision circuit carrier 10 as illustrated in Figures 2 and 3 disposed on top of the stacked battery cells 80. Each cell supervision circuit carrier 10 comprises a first connector 11, a second connector 12 and a CSC 20 that are interconnected as illustrated in Figures 2 and 3.

Further, each cell supervision circuit carrier 10 comprises a plurality of cell pins 62 that are configured for being electrically connected to the battery cells 80 of the battery module 90. Further, electrically conducting cell data lines (not shown) are disposed on the circuit carrier board 5 of each cell supervision circuit carrier 10. The cell data lines are configured for electrically connecting the plurality of cell pins 62 with at least one data input pin (not shown) of the CSC 20 that is configured for determining the voltages of the battery cells 80 from the signals received on the at least one data input pin. The CSC 20 is hence electrically connected to the terminal of each battery cell 80 and is configured for monitoring and balancing the voltage of the individual battery cells 80. Exemplarily, the CSC 20 might comprise a plurality of resistors that are connectable to the individual cells 80 for passively balancing the module 90 by dissipating energy of the highest voltage battery cells 80.

The battery system 100 illustrated in Figure 5 further comprises a battery management system (BMS) 50. The battery management system 50 is configured for communication with electric consumers connected to the board net as well as with the battery modules 90. For communicating, the BMS 50 is coupled to the modules 90 via a daisy chain configuration.

In the daisy chain configuration, the BMS 50 is coupled via a connection cable 70 to the first connector 11 of a first battery module 91 that is an outermost battery module 90, i.e. connected to positive battery system terminal 101. The second connector 12 of the first battery module 91 is coupled to a first connector 11 of a second battery module 92 via another communication cable 70. Thus, a daisy chain layout spans across the battery system 100 and in between the cell supervision circuit carriers 10 of the battery modules 90.

Additionally, the battery system 100 comprises a plurality of busbars 60, wherein most of the busbars 60 are electrically connected between a negative module terminal 93 of a first battery module 91 and a positive module terminal 94 of a second battery module 92. A single busbar 60 interconnects a positive module terminal 94 of an outermost battery module 90 with the positive system terminal 101 and another single busbar 60 interconnects a negative module terminal 93 of an outermost battery module 90 with the negative system terminal 102.

As illustrated in Figure 5, similarly short communication cables 70 can be utilized for connecting all cell supervision circuit carriers 10 and battery modules 90 of battery system 100. Further, identical cell supervision circuit carriers 10 are used for each module 90.

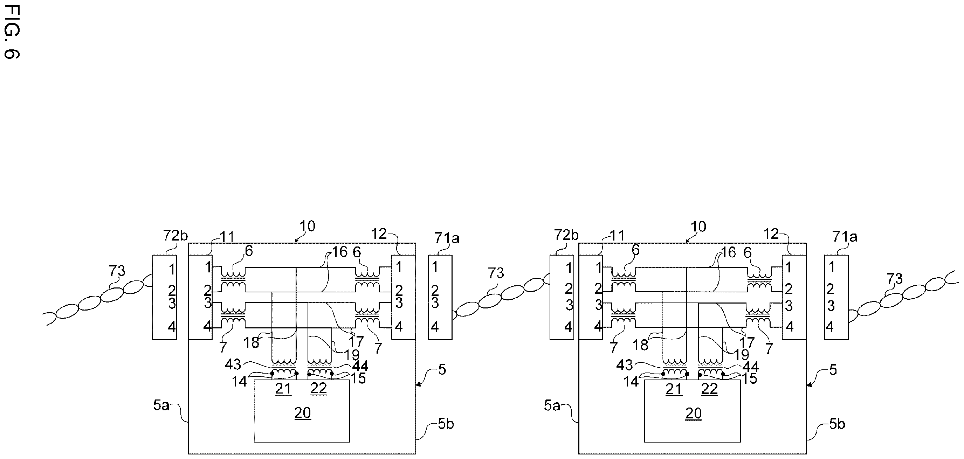

Figure 6 illustrates a sectional top view of a battery system according to an embodiment, emphasizing the connection cables 70 between adjacent cell supervision circuit carriers 10.

Therein, two cell supervision circuit carriers 10, as described with respect to Figure 2 and comprising a CSC chip 20 connected to the chip socket 13, are connected to each other via connection cables. Each connection cable comprises a first connection plug 71a and a second connection plug 72b that are connected to each other via conducting lines 73.

A first pair of pins 1, 2 of each second connection plug 72b is connected to a first pair of first contact pins 1, 2 of each first connector 11 of the cell supervision circuit carriers 10. The first pairs of first contact pins 1, 2 are connected via the first pairs of conducting lines 16 and the third pairs of conducting lines 18 to the first pairs of socket pins 14. The first pairs of socket pins 14 are connected to the differential inputs 21 of the CSC 20 of the respective CSCC 10. Hence, a signal to be inputted to the CSC 20 can be received via the first connectors 11. The differential outputs 22 of the CSCs 20 of the CSCCs 10 are electrically connected to a second pair of socket pins 15, respectively. The second pairs of socket pins 15 are electrically connected to the second pairs of second contact pins 3, 4 via the fourth pairs of conducting lines 19 and the second pairs of conducting lines 17. The second pairs of second contact pins 3, 4 are electrically connected to second pairs of pins 3, 4 of a first connection plug 71a, respectively. Hence, a signal outputted by the CSC 20 can be transmitted via the second connectors 12, respectively.

Hence in the battery system illustrated in Figure 6, a communication direction is determined by selecting the specific first connection plugs 71a, the second pairs of contact pins 3, 4 of which are connected to the pairs of conducting lines 73, respectively, and the specific second connection plugs 72b, the first pairs of contact pins 1, 2 of which are connected to the pairs of conducting lines 73, respectively. Exemplarily, the communication direction could be reversed by using first connection plugs 71b, the first pairs of contact pins 1, 2 of which are connected to the pairs of conducting lines 73, and second connection plugs 72a, the second pairs of contact pins 3, 4 of which are connected to the pairs of conducting lines 73. Alternatively, the first connection plugs 71 are connected via four conducting lines 73 with the second connection plugs 72 for enabling a two-directional communication of the CSCCs 10.

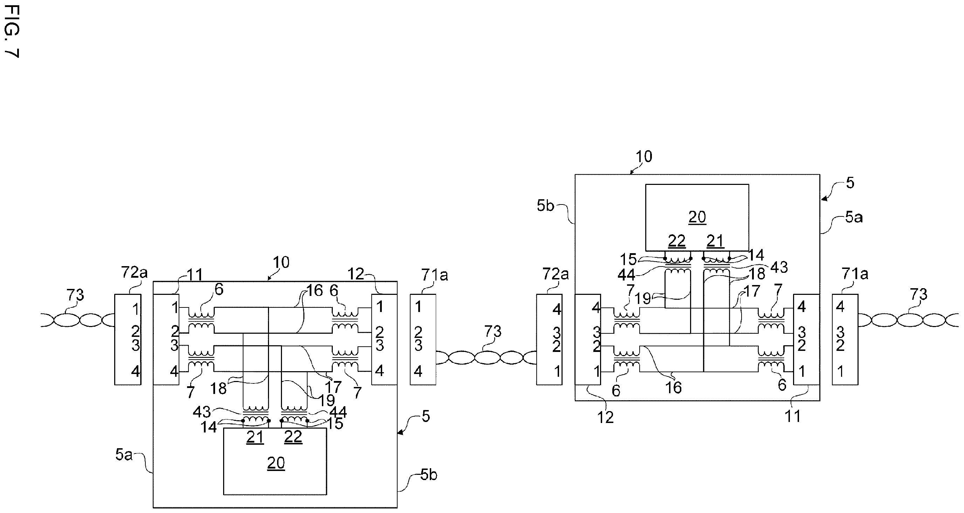

Figure 7 illustrates a sectional top view of a battery system according to another embodiment, emphasizing the connection cables 70 between adjacent CSCCs 10.

Therein, a first cell supervision circuit carrier 10 as described with respect to Figure 2 and comprising a CSC chip 20 is connected to a second cell supervision circuit carrier 10 as described with respect to Figure 2 and comprising a CSC chip 20. Therein, second CSCC 10 is disposed right from first CSCC 10 and rotated by 180° with respect to first CSCC 10.

A first type of connection cable comprises a first connection plug 71a and a second connection plug 72a that are connected to each other via a pair of conducting lines 73.

A first pair of pins 1,2 of a second connection plug 72a is connected to a first pair of first contact pins 1, 2 of a first connector 11 of the first cell supervision circuit carrier 10. The first pair of first contact pins 1, 2 is connected via the first pair of conducting lines and the third pair of conducting lines 18 to the first pair of socket pins 14. The first pair of socket pins 14 is connected to the differential input 21 of the CSC 20 of the first CSCC 10. Hence, a signal to be inputted to the CSC 20 can be received via the first connector 11 of the first CSCC 10.

The differential output 22 of the CSC 20 of the first CSCC 10 is electrically connected to a second pair of socket pins 15. The second pair of socket pins 15 is electrically connected to the second pair of second contact pins 3, 4 via the fourth pair of conducting lines 19 and the second pair of conducting lines 17. The second pair of second contact pins 3, 4 is electrically connected to a second pair of pins 3, 4 of a first connection plug 71a. Hence, a signal outputted by the CSC 20 of first CSCC 10 can be transmitted via the second connector 12.

A second pair of pins 1, 2 of a second connection plug 72a is connected to a first pair of first contact pins 1, 2 of a second connector 12 of the first cell supervision circuit carrier 10. Therefore, the second connection plug 72a is rotated by 180° with respect to the second connection plug 72a connected to the first connector 11 of the first CSCC 10. From the first pair of first contact pins 1, 2 the signal is further transmitted to the differential input 21 of the CSC 20 of the second CSCC 10 and further from the differential output 22 of that CSC 20 to the second pair of contact pins 3, 4 of the first connector 11. The second pair of second contact pins 3, 4 is electrically connected to a second pair of pins 3, 4 of a first connection plug 71a that is rotated by 180° with respect to the first connection plug 71a connected to the second connector 12 of the first CSCC 10.

Hence in the battery system illustrated in Figure 7, a communication direction is determined by selecting the specific relative orientation of the first and second CSCCs 10 as well as selecting the rotational position of the first and second connection plugs 71a and 72a. Exemplarily, the communication direction could be reversed by rotating each of the connection cables by 180°around an axis that is essentially parallel to the respective pair of conducting lines 73. Alternatively, the first connection plugs 71a are each connected via four conducting lines 73 with the respective second connection plug 72a for enabling a two-directional communication across the daisy chain of the first and second CSCCs 10.

### Reference signs

- 1: first pin
- 2: second pin
- 3: third pin
- 4: fourth pin
- 5: circuit carrier board
- 5a: first lateral edge
- 5b: second lateral edge
- 6: first common mode chokes
- 7: second common mode chokes

- 10: cell supervision circuit carrier
- 11: first connector
- 12: second connector
- 13: chip socket
- 14: first pair of socket pins
- 15: second pair of socket pins
- 16: first pair of conducting lines
- 17: second pair of conducting lines
- 18: third pair of conducting lines
- 19: fourth pair of conducting lines

- 20: cell supervision circuit
- 21: differential input
- 22: differential output
- 30: cell supervision circuit carrier (prior art)
- 31: wiring harness (prior art)
- 32: connector (prior art)

- 41: first set of capacitors
- 42: second set of capacitors
- 43: first transformer
- 44: second transformer

- 50: battery management system (BMS)
- 53: BMS connector

- 60: busbar
- 61: busbar elements
- 62: cell pins
- 70: connection cable
- 71: first connection plug
- 72: second connection plug
- 73: conducting lines

- 80: battery cell

- 90: battery module
- 91: first battery module
- 92: second battery module
- 93: negative module terminal
- 94: positive module terminal

- 100: battery system
- 101: positive system terminal
- 102: negative system terminal

## Claims

1. Cell supervision circuit carrier (10) for a battery module (90), comprising
a first connector (11) with a plurality of first contact pins (1, 2, 3, 4) and a second connector (12) with a plurality of second contact pins (1, 2, 3, 4);
a circuit carrier board (5) configured for being mounted to the battery module (90);
a plurality of conductive pads disposed on the circuit carrier board (5) and comprising a first pair of conductive pads configured for being connected to a differential input (21) of a cell supervision circuit, CSC, (20) and a second pair of conductive pads configured for being connected to a differential output (22) of the CSC (20);
**characterized in that** the cell supervision circuit carrier (10) further comprises:
a first pair of conducting lines (16) disposed on the circuit carrier board (5) and electrically connecting a first pair (1, 2) of first contact pins with a first pair (1, 2) of second contact pins;
a second pair of conducting lines (17) disposed on the circuit carrier board (5) and electrically connecting a second pair of first contact pins (3, 4) with a second pair of second contact pins (3, 4);
a third pair of conducting lines (18) disposed on the circuit carrier board (5) and electrically connecting the first pair of conductive pads with the first pair of conducting lines (16); and
a fourth pair of conducting lines (19) disposed on the circuit carrier board (5) and electrically connecting the second pair of conductive pads with the second pair of conducting lines (17).

2. Cell supervision circuit carrier (10) according to claim 1, further comprising a chip socket (13) configured for receiving the CSC (20), wherein the chip socket (13) is mounted to the plurality of conductive pads and comprises a first pair of socket pins (14) configured for being connected to a differential input (21) of the CSC (20) and a second pair of socket pins (15) configured for being connected to a differential output (22) of the CSC (20).

3. Cell supervision circuit carrier (10) according to claim 1 or 2, further comprising a plurality of cell pins (62) configured for being electrically connected to the battery cells (80) of the battery module (90) and electrically conducting cell data lines configured for electrically connecting the plurality of cell pins with at least one data input pin of the CSC (20).

4. Cell supervision circuit carrier (10) according to any of the preceding claims, further comprising busbar elements (61) for electrically interconnecting battery cells (80) of the battery module (90) in series and/or in parallel.

5. Cell supervision circuit carrier (10) according to any of the preceding claims, wherein the first pair of conductive pads is capacitively or inductively coupled to the third pair of conducting lines (18) and wherein the second pair of conductive pads is capacitively or inductively coupled to the fourth pair of conducting lines (19).

6. Cell supervision circuit carrier (10) according to any of the preceding claims,
wherein first common mode chokes (6) are interconnected between the first pairs of contact pins (1, 2) and connection nodes between the first and third pair of conducting lines (16, 18); and
wherein second common mode chokes (7) are interconnected between the second pairs of contact pins (3, 4) and connection nodes between the second and fourth pair of conducting lines (17, 19).

7. Cell supervision circuit carrier (10) according to any of the preceding claims,
wherein the circuit carrier board (5) comprises a first lateral edge (5a) and a second lateral edge (5b) opposite the first lateral edge (5a),
wherein the first connector (11) is arranged at the first lateral edge (5a) and the second connector (12) is arranged at the second lateral edge (5b), and
wherein the first connector (11) and the second connector (12) are equivalent.

8. Cell supervision circuit carrier (10) according to any of the preceding claims, wherein each of the first connector (11) and the second connector (12) is configured for receiving input signals for and for transmitting output signals of the CSC (20).

9. Battery system (100), comprising
a first system terminal (101) and a second system terminal (102);
a plurality of battery modules (90) connected in series between the first system terminal (101) and the second system terminal (102), each battery module (90) comprising a plurality of battery cells (80) electrically interconnected in series and/or in parallel between a negative module terminal (93) and a positive module terminal (94), a cell supervision circuit carrier (10) according to any one of claims 1 to 8 and a cell supervision circuit, CSC, (20) connected to the chip socket (13) of the respective cell supervision circuit carrier (10),
wherein the cell supervision carriers (10) of the plurality of battery modules (90) are connected to each other via the first and second connectors (11, 12) in a daisy chain configuration.

10. Battery system (100) according to claim 9,
wherein the differential input (21) of the CSC (20) comprises a pair of input pins and the differential output (22) of the CSC (20) comprises a pair of output pins;
wherein the pair of input pins is electrically connected with the first pair of conductive pads; and
wherein the pair of output pins is electrically connected with the second pair of conductive pads.

11. Battery system (100) according to claim 9 or 10, further comprising:
a plurality of busbars (60), each busbar (60) interconnecting a positive module terminal (94) of a first battery module (91) and a negative module terminal (93) of a second battery module (92),
wherein the plurality of battery cells (80) of each of the battery modules (90) is electrically interconnected in series and/or in parallel between the negative module terminal (93) and the positive module terminal (94) of the battery module (90) via busbar elements.

12. Battery system (100) according to any one of claims 9 to 11, further comprising
a plurality of connection cables (70), each comprising a first connection plug (71) comprising a plurality of contact pins (1, 2, 3, 4), a second connection plug (72) comprising a plurality of contact pins (1, 2, 3, 4), and a pair of conducting lines (73) electrically connecting a first pair of contact pins (1, 2) of the first connection plug (71) and a second pair (3, 4) of contact pins of the second connection plug (72),
wherein each connection cable (70) interconnects a second connector (12) of a first battery module and a first connector (11) of a second battery module by connecting one of the first and second connection plug (71, 72) to the first connector (11) and by connecting the other one of the first and second connection plug (71, 72) to the second connector (12).

13. Battery system (100) according to claim 12, further comprising a battery management system (50) coupled to the first connector (11) of a first battery module (91) via a further connection cable (70).

14. Battery system (100) according to any one of the claims 9 to 13, further comprising another pair of conducting lines electrically connecting a second pair of contact pins (3, 4) of the first connection plug (71) and a first pair (1, 2) of contact pins of the second connection plug (72).

15. An electric vehicle, comprising a plurality of cell supervision circuit carriers (10) according to any one of the claims 1 to 8 or a battery system (100) according to any one of the claims 9 to 14.

## Patentansprüche

1. Zellenüberwachungsschaltungsträger (10) für ein Batteriemodul (90), aufweisend
einen ersten Verbinder (11) mit einer Vielzahl erster Kontaktstifte (1, 2, 3, 4) und einen zweiten Verbinder (12) mit einer Vielzahl zweiter Kontaktstifte (1,2,3,4);
eine Schaltungsträgerplatte (5), die konfiguriert ist, um am Batteriemodul (90) angebracht zu werden;
eine Vielzahl leitender Kontaktstellen, die auf der Schaltungsträgerplatte (5) angeordnet sind und ein erstes Paar leitender Kontaktstellen, das konfiguriert ist, um mit einem Differenzeingang (21) einer Zellenüberwachungsschaltung, CSC, (20) verbunden zu werden, und ein zweites Paar leitender Kontaktstellen, das konfiguriert ist, um mit einem Differenzausgang (22) der CSC (20) verbunden zu werden, aufweisen;
**dadurch gekennzeichnet, dass** der Zellenüberwachungsschaltungsträger (10) ferner aufweist:
ein erstes Paar leitender Leitungen (16), das auf der Schaltungsträgerplatte (5) angeordnet ist und ein erstes Paar (1, 2) erster Kontaktstifte mit einem ersten Paar (1, 2) zweiter Kontaktstifte elektrisch verbindet;
ein zweites Paar leitender Leitungen (17), das auf der Schaltungsträgerplatte (5) angeordnet ist und ein zweites Paar erster Kontaktstifte (3, 4) mit einem zweiten Paar zweiter Kontaktstifte (3, 4) elektrisch verbindet;
ein drittes Paar leitender Leitungen (18), das auf der Schaltungsträgerplatte (5) angeordnet ist und das erste Paar leitender Kontaktstellen mit dem ersten Paar leitender Leitungen (16) elektrisch verbindet; und
ein viertes Paar leitender Leitungen (19), das auf der Schaltungsträgerplatte (5) angeordnet ist und das zweite Paar leitender Kontaktstellen mit dem zweiten Paar leitender Leitungen (17) elektrisch verbindet.

2. Zellenüberwachungsschaltungsträger (10) nach Anspruch 1, ferner aufweisend einen Chip-Sockel (13), der konfiguriert ist, um die CSC (20) aufzunehmen, wobei der Chip-Sockel (13) an der Vielzahl leitender Kontaktstellen angebracht ist und ein erstes Paar von Sockelstiften (14), das konfiguriert ist, um mit einem Differenzeingang (21) der CSC (20) verbunden zu werden, und ein zweites Paar von Sockelstiften (15), das konfiguriert ist, um mit einem Differenzausgang (22) der CSC (20) verbunden zu werden, aufweist.

3. Zellenüberwachungsschaltungsträger (10) nach Anspruch 1 oder 2, ferner aufweisend eine Vielzahl von Zellenstiften (62), die konfiguriert sind, um mit den Batteriezellen (80) des Batteriemoduls (90) elektrisch verbunden zu werden, und elektrisch leitende Zellendatenleitungen, die konfiguriert sind, um die Vielzahl von Zellstiften mit zumindest einem Dateneingangsstift der CSC (20) elektrisch zu verbinden.

4. Zellenüberwachungsschaltungsträger (10) nach einem der vorhergehenden Ansprüche, ferner aufweisend Sammelschienenelemente (61), um die Batteriezellen (80) des Batteriemoduls (90) elektrisch in Reihe und/oder parallel zu schalten.

5. Zellenüberwachungsschaltungsträger (10) nach einem der vorhergehenden Ansprüche, wobei das erste Paar leitender Kontaktstellen mit dem dritten Paar leitender Leitungen (18) kapazitiv oder induktiv gekoppelt ist und wobei das zweite Paar leitender Kontaktstellen mit dem vierten Paar leitender Leitungen (19) kapazitiv oder induktiv gekoppelt ist.

6. Zellenüberwachungsschaltungsträger (10) nach einem der vorhergehenden Ansprüche,
wobei erste Gleichtaktdrosseln (6) zwischen die ersten Paare von Kontaktstiften (1, 2) und Verbindungsknoten zwischen dem ersten und dritten Paar leitender Leitungen (16, 18) geschaltet sind; und
wobei zweite Gleichtaktdrosseln (7) zwischen die zweiten Paare von Kontaktstiften (3, 4) und Verbindungsknoten zwischen dem zweiten und vierten Paar leitender Leitungen (17, 19) geschaltet sind.

7. Zellenüberwachungsschaltungsträger (10) nach einem der vorhergehenden Ansprüche,
wobei die Schaltungsträgerplatte (5) einen ersten seitlichen Rand (5a) und einen zweiten seitlichen Rand (5b) gegenüber dem ersten seitlichen Rand (5a) aufweist,
wobei der erste Verbinder (11) am ersten seitlichen Rand (5a) angeordnet ist und der zweite Verbinder (12) am zweiten seitlichen Rand (5b) angeordnet ist, und
wobei der erste Verbinder (11) und der zweite Verbinder (12) äquivalent sind.

8. Zellenüberwachungsschaltungsträger (10) nach einem der vorhergehenden Ansprüche, wobei jeder des ersten Verbinders (11) und des zweiten Verbinders (12) konfiguriert ist, um Eingangssignale für die CSC (20) zu empfangen und um Ausgangssignale der CSC (20) zu übertragen.

9. Batteriesystem (100), aufweisend
einen ersten Systemanschluss (101) und einen zweiten Systemanschluss (102);
eine Vielzahl von Batteriemodulen (90), die zwischen den ersten Systemanschluss (101) und den zweiten Systemanschluss (102) in Reihe geschaltet sind, wobei jedes Batteriemodul (90) eine Vielzahl von Batteriezellen (80), die zwischen einen negativen Modulanschluss (93) und einen positiven Modulanschluss (94) elektrisch in Reihe und/oder parallel geschaltet sind, einen Zellenüberwachungsschaltungsträger (10) nach einem der Ansprüche 1 bis 8 und eine Zellenüberwachungsschaltung, CSC, (20), die mit dem Chip-Sockel (13) des jeweiligen Zellenüberwachungsschaltungsträgers (10) verbunden ist, aufweist,
wobei die Zellenüberwachungsträger (10) der Vielzahl von Batteriemodulen (90) über den ersten und zweiten Verbinder (11, 12) in einer Daisy-Chain-Konfiguration miteinander verbunden sind.

10. Batteriesystem (100) nach Anspruch 9,
wobei der Differenzeingang (21) der CSC (20) ein Paar Eingangsstifte und der Differenzausgang (22) der CSC (20) ein Paar Ausgangsstifte aufweist;
wobei das Paar von Eingangsstiften mit dem ersten Paar leitender Kontaktstellen elektrisch verbunden ist; und
wobei das Paar von Ausgangsstiften mit dem zweiten Paar leitender Kontaktstellen elektrisch verbunden ist.

11. Batteriesystem (100) nach Anspruch 9 oder 10, ferner aufweisend:
eine Vielzahl von Sammelschienen (60), wobei jede Sammelschiene (60) einen positiven Modulanschluss (94) eines ersten Batteriemoduls (91) und einen negativen Modulanschluss (93) eines zweiten Batteriemoduls (92) miteinander verbindet,
wobei die Vielzahl von Batteriezellen (80) jedes der Batteriemodule (90) über Sammelschienenelemente zwischen den negativen Modulanschluss (93) und den positiven Modulanschluss (94) des Batteriemoduls (90) elektrisch in Reihe und/oder parallel geschaltet ist.

12. Batteriesystem (100) nach einem der Ansprüche 9 bis 11, ferner aufweisend
eine Vielzahl von Verbindungskabeln (70), die jeweils einen ersten Verbindungsstecker (71), der eine Vielzahl von Kontaktstiften (1, 2, 3, 4) aufweist, einen zweiten Verbindungsstecker (72), der eine Vielzahl von Kontaktstiften (1, 2, 3, 4) aufweist, und ein Paar leitender Leitungen (73), die ein erstes Paar von Kontaktstiften (1, 2) des ersten Verbindungssteckers (71) und ein zweites Paar (3, 4) von Kontaktstiften des zweiten Verbindungssteckers (72) elektrisch verbinden, aufweist,
wobei jedes Verbindungskabel (70) einen zweiten Verbinder (12) eines ersten Batteriemoduls und einen ersten Verbinder (11) eines zweiten Batteriemoduls durch Verbinden eines des ersten und zweiten Verbindungssteckers (71, 72) mit dem ersten Verbinder (11) und durch Verbinden des anderen des ersten und zweiten Verbindungssteckers (71, 72) mit dem zweiten Verbinder (12) miteinander verbindet.

13. Batteriesystem (100) nach Anspruch 12, ferner aufweisend ein Batteriemanagementsystem (50), das über ein weiteres Verbindungskabel (70) mit dem ersten Verbinder (11) eines ersten Batteriemoduls (91) gekoppelt ist.

14. Batteriesystem (100) nach einem der Ansprüche 9 bis 13, ferner aufweisend ein weiteres Paar leitender Leitungen, die ein zweites Paar von Kontaktstiften (3, 4) des ersten Verbindungssteckers (71) und ein erstes Paar (1, 2) von Kontaktstiften des zweiten Verbindungssteckers (72) elektrisch verbinden.

15. Ein Elektrofahrzeug, aufweisend eine Vielzahl von Zellenüberwachungsschaltungsträgern (10) nach einem der Ansprüche 1 bis 8 oder ein Batteriesystem (100) nach einem der Ansprüche 9 bis 14.

## Revendications

1. Support de circuit de supervision de cellule (10) pour un module de batterie (90), comprenant :
un premier connecteur (11) avec une pluralité de premières broches de contact (1, 2, 3, 4) et un deuxième connecteur (12) avec une pluralité de deuxièmes broches de contact (1, 2, 3, 4) ;
une carte de support de circuit (5) configurée pour être montée sur le module de batterie (90) ;
une pluralité de pastilles conductrices disposées sur la carte de support de circuit (5) et comprenant une première paire de pastilles conductrices configurées pour être connectées à une entrée différentielle (21) d'un circuit de supervision de cellule, CSC, (20) et une deuxième paire de pastilles conductrices configurées pour être connectées à une sortie différentielle (22) du CSC (20) ;
**caractérisé en ce que** le support de circuit de supervision de cellule (10) comprend en outre :
une première paire de lignes conductrices (16) disposées sur la carte de support de circuit (5) et connectant électriquement une première paire (1, 2) de premières broches de contact à une première paire (1, 2) de deuxièmes broches de contact ;
une deuxième paire de lignes conductrices (17) disposées sur la carte de support de circuit (5) et connectant électriquement une deuxième paire de premières broches de contact (3, 4) à une deuxième paire de deuxièmes broches de contact (3, 4) ;
une troisième paire de lignes conductrices (18) disposées sur la carte de support de circuit (5) et connectant électriquement la première paire de pastilles conductrices à la première paire de lignes conductrices (16) ; et
une quatrième paire de lignes conductrices (19) disposées sur la carte de support de circuit (5) et connectant électriquement la deuxième paire de pastilles conductrices à la deuxième paire de lignes conductrices (17) .

2. Support de circuit de supervision de cellule (10) selon la revendication 1, comprenant en outre une embase de puce (13) configurée pour recevoir le CSC (20), dans lequel l'embase de puce (13) est montée sur la pluralité de pastilles conductrices et comprend une première paire de broches d'embase (14) configurées pour être connectées à une entrée différentielle (21) du CSC (20) et une deuxième paire de broches d'embase (15) configurées pour être connectées à une sortie différentielle (22) du CSC (20).

3. Support de circuit de supervision de cellule (10) selon la revendication 1 ou 2, comprenant en outre une pluralité de broches de cellule (62) configurées pour être connectées électriquement aux cellules de batterie (80) du module de batterie (90) et des lignes de données de cellule électriquement conductrices configurées pour connecter électriquement la pluralité de broches de cellule à au moins une broche d'entrée de données du CSC (20).

4. Support de circuit de supervision de cellule (10) selon l'une quelconque des revendications précédentes, comprenant en outre des éléments de barre omnibus (61) pour interconnecter électriquement les cellules de batterie (80) du module de batterie (90) en série et/ou en parallèle.

5. Support de circuit de supervision de cellule (10) selon l'une quelconque des revendications précédentes, dans lequel la première paire de pastilles conductrices est couplée de manière capacitive ou inductive à la troisième paire de lignes conductrices (18) et dans lequel la deuxième paire de pastilles conductrices est couplée de manière capacitive ou inductive à la quatrième paire de lignes conductrices (19).

6. Support de circuit de supervision de cellule (10) selon l'une quelconque des revendications précédentes,
dans lequel des premières bobines d'arrêt de mode commun (6) sont interconnectées entre les premières paires de broches de contact (1, 2) et les nœuds de connexion entre les première et troisième paires de lignes conductrices (16, 18) ; et
dans lequel des deuxièmes bobines d'arrêt de mode commun (7) sont interconnectées entre les deuxièmes paires de broches de contact (3, 4) et les nœuds de connexion entre les deuxième et quatrième paires de lignes conductrices (17, 19).

7. Support de circuit de supervision de cellule (10) selon l'une quelconque des revendications précédentes,
dans lequel la carte de support de circuit (5) comprend un premier bord latéral (5a) et un deuxième bord latéral (5b) opposé au premier bord latéral (5a),
dans lequel le premier connecteur (11) est agencé au niveau du premier bord latéral (5a) et le deuxième connecteur (12) est agencé au niveau du deuxième bord latéral (5b), et
dans lequel le premier connecteur (11) et le deuxième connecteur (12) sont équivalents.

8. Support de circuit de supervision de cellule (10) selon l'une quelconque des revendications précédentes, dans lequel chacun du premier connecteur (11) et du deuxième connecteur (12) est configuré pour recevoir des signaux d'entrée et pour transmettre des signaux de sortie du CSC (20) .

9. Système de batterie (100), comprenant :
une première borne de système (101) et une deuxième borne de système (102) ;
une pluralité de modules de batterie (90) connectés en série entre la première borne de système (101) et la deuxième borne de système (102), chaque module de batterie (90) comprenant une pluralité de cellules de batterie (80) interconnectées électriquement en série et/ou en parallèle entre une borne de module négative (93) et une borne de module positive (94), un support de circuit de supervision de cellule (10) selon l'une quelconque des revendications 1 à 8 et un circuit de supervision de cellule, CSC, (20) connecté à l'embase de puce (13) du support de circuit de supervision de cellule (10) respectif,
dans lequel les supports de supervision de cellule (10) de la pluralité de modules de batterie (90) sont connectés les uns aux autres par l'intermédiaire des premier et deuxième connecteurs (11, 12) en une configuration en guirlande.

10. Système de batterie (100) selon la revendication 9,
dans lequel l'entrée différentielle (21) du CSC (20) comprend une paire de broches d'entrée et la sortie différentielle (22) du CSC (20) comprend une paire de broches de sortie ;
dans lequel la paire de broches d'entrée est connectée électriquement à la première paire de pastilles conductrices ; et
dans lequel la paire de broches de sortie est connectée électriquement à la deuxième paire de pastilles conductrices.

11. Système de batterie (100) selon la revendication 9 ou 10, comprenant en outre :
une pluralité de barres omnibus (60), chaque barre omnibus (60) interconnectant une borne de module positive (94) d'un premier module de batterie (91) et une borne de module négative (93) d'un deuxième module de batterie (92),
dans lequel la pluralité de cellules de batterie (80) de chacun des modules de batterie (90) sont interconnectées électriquement en série et/ou en parallèle entre la borne de module négative (93) et la borne de module positive (94) du module de batterie (90) par l'intermédiaire d'éléments de barre omnibus.

12. Système de batterie (100) selon l'une quelconque des revendications 9 à 11, comprenant en outre :
une pluralité de câbles de connexion (70), comprenant chacun une première prise de connexion (71) comprenant une pluralité de broches de contact (1, 2, 3, 4), une deuxième prise de connexion (72) comprenant une pluralité de broches de contact (1, 2, 3, 4), et une paire de lignes conductrices (73) connectant électriquement une première paire de broches de contact (1, 2) de la première prise de connexion (71) et une deuxième paire (3, 4) de broches de contact de la deuxième prise de connexion (72),
dans lequel chaque câble de connexion (70) interconnecte un deuxième connecteur (12) d'un premier module de batterie et un premier connecteur (11) d'un deuxième module de batterie en connectant l'une des première et deuxième prises de connexion (71, 72) au premier connecteur (11) et en connectant l'autre des première et deuxième prises de connexion (71, 72) au deuxième connecteur (12).

13. Système de batterie (100) selon la revendication 12, comprenant en outre un système de gestion de batterie (50) couplé au premier connecteur (11) d'un premier module de batterie (91) par l'intermédiaire d'un câble de connexion supplémentaire (70).

14. Système de batterie (100) selon l'une quelconque des revendications 9 à 13, comprenant en outre une autre paire de lignes conductrices connectant électriquement une deuxième paire de broches de contact (3, 4) de la première prise de connexion (71) et une première paire (1, 2) de broches de contact de la deuxième prise de connexion (72).

15. Véhicule électrique, comprenant une pluralité de supports de circuit de supervision de cellule (10) selon l'une quelconque des revendications 1 à 8 ou un système de batterie (100) selon l'une quelconque des revendications 9 à 14.
